# EUROPÄISCHE PATENTANMELDUNG

(11) **EP 2 786 650 A1**
(43) Veröffentlichungstag der Anmeldung: **08.10.2014**
(21) Anmeldenummer: 14154984.0
(22) Anmeldetag: 13.02.2014
(51) Int. Cl.: A01D 57/20

(54) **Schneidwerk**

(30) Priorität: 04.04.2013 DE 102013103381
(71) Anmelder: CLAAS Selbstfahrende Erntemaschinen GmbH, 33428 Harsewinkel (DE)
(72) Erfinder: Füchtling, Christian, 48317 Rinkerode (DE)

(57) **Zusammenfassung**

Die vorliegende Erfindung betrifft ein Schneidwerk (1), umfassend einen an einem Grundrahmen (2) angeordneten Mittenabschnitt (3) und mindestens zwei benachbart zu dem Mittenabschnitt (3) an dem Grundrahmen (2) angeordnete Seitenabschnitte (4), einen sich über die Breite des Schneidwerkes (1) erstreckenden Messerbalken (6) sowie zumindest eine hinter dem Messerbalken (6) angeordnete Fördervorrichtung (5), die auf den jeweiligen Seitenabschnitten (4) als mindestens ein endloses Förderband (7) ausgeführt ist, welche benachbart zu dem Mittenabschnitt (3) angeordnet sind, um von dem Messerbalken (6) abgeschnittenes Erntegut seitwärts in Richtung des Mittenabschnittes (3) zu transportieren, wobei auf dem Mittenabschnitt (3) zu dem Messerbalken (6) und dem jeweiligen Seitenabschnitt (4) benachbart antreibbare Förderelemente (14) angeordnet sind, welche von den jeweiligen Förderbändern (7) der Seitenabschnitten (4) an den Mittenabschnitt (3) abgegebenes Erntegut annehmen und umlenken.

## Beschreibung

Die vorliegende Erfindung betrifft ein Schneidwerk gemäß dem Oberbegriff des Anspruches 1.

Aus der US 8,205,422 B2 ist ein Schneidwerk gemäß dem Oberbegriff des Anspruches 1 bekannt. Das Schneidwerk weist einen Grundrahmen auf, an welchem ein Mittenabschnitt und benachbart zu diesem zwei Seitenabschnitte angeordnet sind. Weiterhin umfasst das Schneidwerk einen flexiblen, sich über die Breite des Schneidwerkes erstreckenden Messerbalken, der dem Abschneiden von Erntegut dient, welches von zumindest einer hinter dem Messerbalken angeordneten Fördervorrichtung transportiert wird. Als Fördervorrichtungen kommen gemäß der US 8,205,422 B2 auf den Seitenschnitten endlos umlaufende, mit Leisten versehene Förderbänder zum Einsatz, die das Erntegut quer zur Bewegungsrichtung des Schneidwerkes im Erntebetrieb in Richtung des Mittenabschnittes fördern. Der Mittenabschnitt weist ebenfalls ein endlos umlaufendes Förderband auf, welches sich in Bewegungsrichtung des Schneidwerkes im Erntebetrieb erstreckt und das Erntegut einer Erntemaschine zuführt, an der das Schneidwerk angebracht ist. Konstruktionsbedingt liegt das Förderband des Mittenabschnittes auf einer Ebene unterhalb des Messerbalkens, so dass das Erntegut bei dessen Abgabe von den Bändern auf das Förderband fällt. Zwischen dem Förderband und den benachbarten Förderbändern der Seitenabschnitte verbleibt ein vertikaler Spalt. Das Förderband des Mittenabschnittes führt das an dieses abgegebene Erntegut einer mit einziehbaren Fingern versehenen Einzugswalze zu, die das Erntegut an einen Einzugskanal der Erntemaschine weiterleitet. Das Förderband des Mittenabschnittes erstreckt sich nicht bis unmittelbar an den Messerbalken, sondern es verbleibt ein sich in Förderrichtung des Förderbandes erstreckender Bereich, in welchem sich Erntegut hinter dem Messerbalken ansammeln kann, welches von dem Förderband nicht erfasst wird. Die Einzugswalze ist mit Bezug auf den Messerbalken soweit zurückliegend angeordnet, dass auch diese nicht dazu geeignet ist, das Erntegut zu erfassen. Die Ansammlung von Erntegut hinter dem Messerbalken führt dazu, dass es von den Leisten auf der Oberseite der Förderbänder der Seitenabschnitte erfasst und unter diese gezogen wird, so dass es als Erntegutverlust auf den Boden fällt. Ein Weiterer Nachteil stellt sich in Erntegebieten ein, in welchen das Erntegut, beispielsweise Getreide, kurz unterhalb der zu erntenden Frucht abgeschnitten wird, wodurch der Anteil an Stroh in dem von dem Schneidwerk aufgenommenen Erntegut signifikant sinkt. Im Fall von Getreide gelangen im Wesentlichen nur Ähren auf das jeweilige Förderband, was dazu führt, dass der Erntegutstrom relativ kleinvolumig ist. Erreicht das Erntegut den Mittenbereich, so führt der weiter oben beschriebene Umstand dazu, dass die Erntegutverluste am Schneidwerk deutlich ansteigen.

Ausgehend von dem vorgenannten Stand der Technik ist es die Aufgabe der vorliegenden Erfindung ein Schneidwerk bereitzustellen, welches sich durch eine bessere Gutabführung im Mittenabschnitt auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass auf dem Mittenabschnitt antreibbare Förderelemente benachbart zu dem Messerbalken und dem jeweiligen Seitenabschnitt angeordnet sind, welche von den jeweiligen Förderbändern der Seitenabschnitte an den Mittenabschnitt abgegebenes Erntegut annehmen und umlenken. Hierdurch wird eine Vermeidung einer Gutansammlung unmittelbar hinter dem Messerbalken im Mittenabschnitt des Schneidwerkes erreicht, wodurch dass Einziehen von Erntegut durch die Förderbänder der Seitenabschnitte unterhalb derselben verhindert wird. Damit einhergehend werden Erntegutverluste vermieden, was insbesondere in Erntegebieten mit niedrigem Ertrag von großer Bedeutung ist.

Vorzugsweise kann das jeweilige Förderelement kreisscheibenförmig ausgebildet sein. Hierdurch kann der durch die Förderelemente im Mittenabschnitt beanspruchte Bauraum reduziert werden. Insbesondere kann der Abstand zwischen dem Mittenabschnitt und dem Förderelement gering gehalten werden, um das Eindringen von Erntegut in den Bereich zwischen dem jeweiligen Förderelement und dem Mittenabschnitt möglichst zu verhindern. Zudem kann auf Grund der Symmetrie der Förderelemente eine gleichbleibende Erntegutmenge abgefördert werden. Das Förderelement kann eine strukturierte Oberfläche aufweisen, damit das darauf befindliche Erntegut nicht fortgeschleudert wird, bevor es eine Umlenkung quer zur Förderrichtung der Förderbänder erfahren hat.

Hierfür können die Förderelemente auf einer auf dem Mittenabschnitt angeordneten vertikalen Drehachse gelagert sein. Dadurch lässt sich eine flache Bauform im Mittenbereich realisieren, so dass eine Behinderung des Gutflusses vermieden wird.

Besonders vorteilhaft ist es, dass das jeweilige Förderelement eine Abdeckung aufweist, welche das Förderelement teileweise abdeckt. Die Abdeckung verhindert das Ablagern von Erntegut auf den rotierenden Förderelementen, so dass kein Erntegut umlaufen kann.

Insbesondere kann die Abdeckung eine im Wesentlichen kreissektorförmige Kontur aufweisen. Somit kann nur der Teil des Förderelementes freiliegen, der das Erntegut wirksam umlenkt, das heißt von den Seitenabschnitten kommendes Erntegut wird um einen Winkel gleich oder größer 90° umgelenkt.

In bevorzugter Weiterbildung kann sich die Abdeckung von der Drehachse ausgehend in einer von dem Messerbalken im Wesentlichen abgewandten Richtung über das Förderelement erstrecken. Hierdurch wird der Effekt erzielt, dass das auf dem kreisscheibenförmigen Förderelement liegende Erntegut abgestreift werden kann, wobei es in die bevorzugte Förderrichtung abgelenkt wird. Eine in Richtung des Messerbalkens gerichtete Umlenkung des Erntegutes kann dadurch vermieden werden.

Hierbei kann die Abdeckung eine Oberfläche mit geringer Oberflächenrauheit aufweisen. Dadurch wird erreicht, dass Ablagerungen von Erntegut auf der Oberfläche der Abdeckung vermieden werden. Erntegut, welches von dem Förderband des jeweiligen Seitenabschnittes auf die Abdeckung gelangt, kann von dieser heruntergleiten und wird von einer Einzugsvorrichtung im Mittenabschnitt des Schneidwerkes erfasst.

Vorteilhafterweise kann die Abdeckung auf ihrer dem Förderband abgewandten Seite eine konvexe Kontur aufweisen. Hierdurch kann ein Abstreifeffekt erzielt werden, so dass auf dem Förderelement liegendes Erntegut nicht umläuft. Die konvexe Kontur ist zudem strömungstechnisch besonders günstig und begünstigt die Gutumlenkung durch das Förderelement.

Gemäß einer bevorzugten Weiterbildung kann die konvex konturierte Seite der Abdeckung einen Wulst mit einem im Wesentlichen kreisförmigen Querschnitt aufweisen. Dadurch kann eine Schnittwirkung der flach bauenden Abdeckung, die durch die äußere Kante der Abdeckung auf das Erntegut ausgeübt werden könnte, vermieden werden. Darüber hinaus ist ein Festklemmen von Erntegut zwischen der Abdeckung und dem Förderelement weitgehend vermeidbar.

Gemäß einer bevorzugten Ausgestaltung kann der Mittenabschnitt eine starre, auf ihrer Oberseite konturierte Bodenplatte aufweisen, die das von den Seitenabschnitten kommende Erntegut umlenkt. Die konturierte Bodenplatte dient der passiven Gutführung und wird durch die auf der Bodenplatte angeordneten Förderelemente bei dieser Aufgabe unterstützt. Die Förderelemente lenken das von den Seitenabschnitten kommende Erntegut bis zu dessen Abgabe durch das Abstreifen an der Abdeckung um und beschleunigen es währenddessen. Eine als Einzugswalze ausgeführte Einzugsvorrichtung kann das aus den am weitesten entfernten Bereichen des Mittenabschnittes kommende Erntegut somit besser erfassen.

Alternativ kann der Mittenabschnitt ein Band aufweisen, welches sich quer zu den Förderbändern der Seitenabschnitte erstreckt, um das Erntegut in Richtung des Einzugskanales eines Mähdreschers zu fördern.

Insbesondere kann der Mittenabschnitt ein Leitelement und/oder Begrenzungselement aufweisen, welches zwischen den Förderelementen angeordnet ist. Das Leitelement kann den Gutfluss und die Gutannahme durch die Förderelemente in diesem Bereich unterstützen.

Hierzu kann das Leitelement als ein keilförmiger Vorsprung ausgeführt sein. Dieser dient der Gutumlenkung, um die Gutannahme durch die Einzugswalze zu verbessern.

Des Weiteren kann das Begrenzungselement als ein im Wesentlichen senkrecht auf dem Mittenabschnitt stehend angeordnetes Blech ausgeführt sein, welches sich ausgehend von dem Messerbalken zumindest abschnittsweise in Richtung des Grundrahmens erstreckt.

Vorteilhafterweise kann das jeweilige Förderelement einzelmotorisch antreibbar sein. Hierdurch ließe sich eine individuelle, an das Erntegutaufkommen in den kritischen Bereichen des Schneidwerks angepasste Steuerung realisieren. Als Antriebsmittel der Förderelemente käme ein Elektromotor oder ein Hydraulikmotor in Frage, der auf der Unterseite des Mittenabschnittes angeordnet sein könnte.

Die vorliegende Erfindung wird nachstehend anhand von in den Zeichnungen dargestellten Ausführungsbeispielen näher erläutert.

Es zeigen:
- Fig. 1: eine Ansicht eines Schneidwerkes von schräg vorne;
- Fig. 2: eine Detailansicht des Schneidwerkes gemäß Fig. 1 von oben;
- Fig. 3: eine Detailansicht des Schneidwerkes gemäß Fig. 1 von schräg oben;
- Fig. 4: eine Detailansicht des Schneidwerkes gemäß Fig. 1 von schräg hinten;
- Fig. 5: eine Detailansicht eines Mittenbereiches einer zweiten Ausführungsform eines Schneidwerkes;
- Fig. 6: eine Detailansicht des Mittenbereiches gemäß Fig. 5 in einer dritten Ausführungsform des Schneidwerkes.

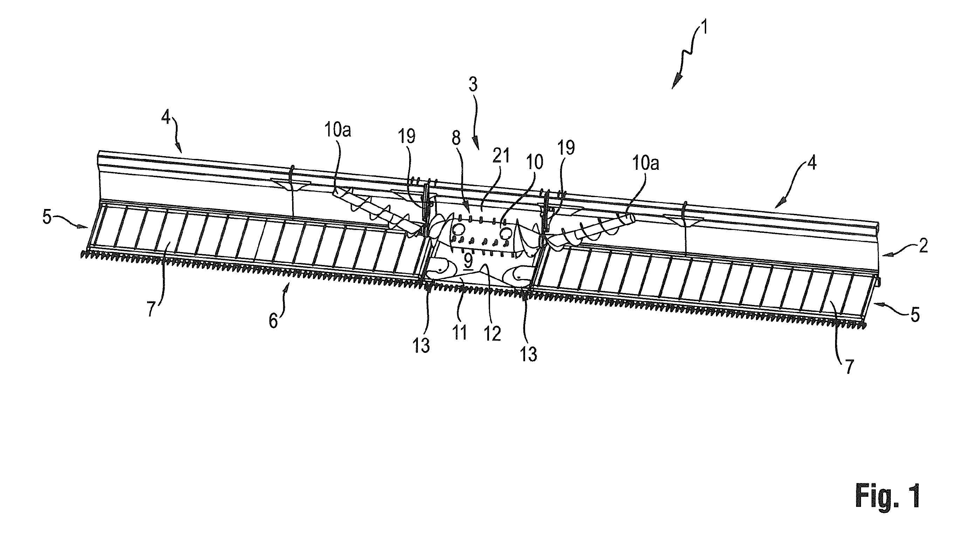

Die Darstellung in Fig. 1 zeigt eine schematische Ansicht auf ein Schneidwerk 1 von schräg vorne. Das Schneidwerk 1 weist einen Grundrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite ein durchgehender Messerbalken 6 angeordnet, der sich im Wesentlichen über die gesamte Bereite des Schneidwerkes 1 erstreckt. Weiterhin sind an dem Grundrahmen 2 des Schneidwerkes 1 nicht dargestellte Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 6.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 mindestens ein endlos umlaufendes Förderband 7 umfasst. Die endlos umlaufenden Förderbänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren, wo es einer Einzugsvorrichtung 8 zugeführt wird. Die Einzugsvorrichtung 8 ist als eine antreibbare Einzugswalze 10, die mittels Rahmenelementen 19 an dem Grundrahmen 2 gelagert ist, ausgeführt, welcher sich seitlich nach außen erstreckende Einzugsschnecken 10a zugeordnet sind. Die Einzugsvorrichtung 8 führt das von den endlosen Förderbändern 7 dem Mittenabschnitt 3 seitlich zugeführte Erntegut einer in dem Grundrahmen 2 vorgesehenen, hinter der Einzugswalze 10 befindlichen Öffnung 21 zu, durch welche das Erntegut durch einen an einem nicht dargestellten Mähdrescher befindlichen Einzugskanal, an dem das Schneidwerk 1 befestigbar ist, dem Mähdrescher zur weiteren Verarbeitung übergeben wird.

Der Mittenabschnitt 3 umfasst eine starre Bodenplatte 9, die auf ihrer der oberhalb der Bodenplatte 9 angeordneten Einzugswalze 10 zugewandten Oberseite konturiert ausgeführt ist, während die dem Boden zugewandte Unterseite der Bodenplatte 9 eine im Wesentlichen ebene Fläche aufweist. Die konturierte Oberseite der Bodenplatte 9 weist einen keilförmigen, über die Bodenplatte 9 erhabenen Vorsprung 11 auf. Der Vorsprung 11 ist von der Vorderkante des Schneidwerkes 1 ausgehend sich in Richtung der Einzugsvorrichtung 8 verjüngend ausgeführt und mündet in einer der Einzugswalze 10 zugewandten Spitze 12. Der Vorsprung 11 dient der zwangsgeführten Gutumlenkung, um das von den Förderbändern 7 bereitgestellte Erntegut in den Einzugsbereich der Einzugsvorrichtung 8 umzulenken und dadurch die Gutannahme der Einzugsvorrichtung 8 zu verbessern. Die Höhe des Vorsprunges 11 der Bodenplatte 9 kann dabei variieren, um eine ausreichende Gutumlenkung zu sichern.

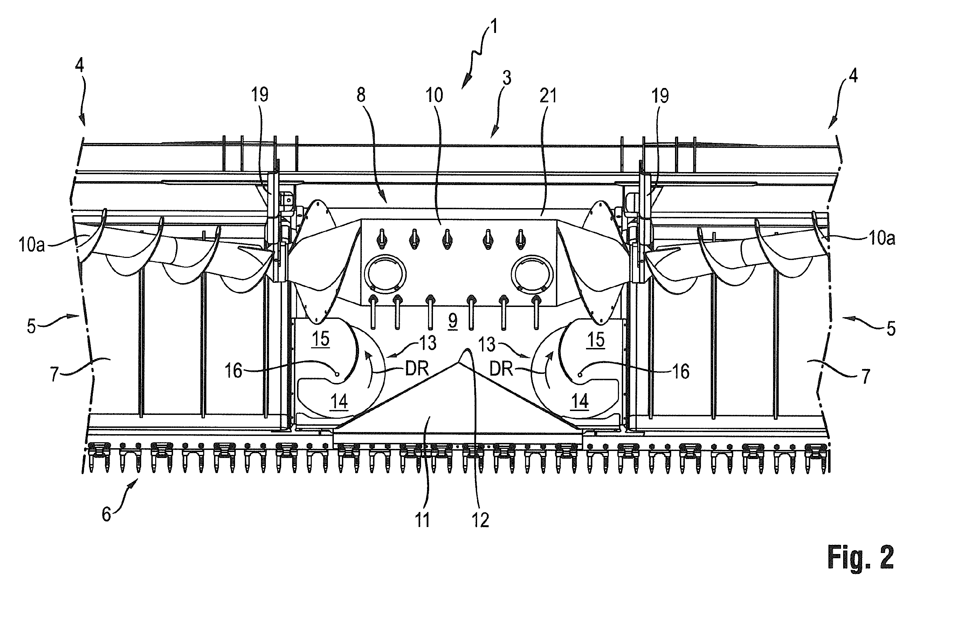

Auf der Oberseite der Bodenplatte 9 sind benachbart zu dem Vorsprung 11 Fördermittel 13 angeordnet, welche den Gutfluss in diesem unmittelbar zu dem Messerbalken 6 und dem Förderband 7 benachbarten Eckbereich unterstützen. Die Fördermittel 13 und ihrer Funktionsweise werden nachfolgend anhand der Detailansichten in den Fig. 2 bis 4 näher erläutert.

Fig. 2 zeigt eine Detailansicht des Schneidwerkes 1, insbesondere des Mittenabschnittes 3, von oben. Die Fördermittel 13 umfassen jeweils ein kreisscheibenförmiges, antreibbares Förderelement 14, welches jeweils auf einer Drehachse 16 auf der Bodenplate 9 in Drehrichtung DR drehbar gelagert ist. Die Förderelemente 14 drehen sich zueinander gegenläufig in Richtung der Einzugswalze 10. Das jeweilige Förderelement 14 ist teilweise durch eine flächige Abdeckung 15 abgedeckt. Die Abdeckung 15 weist eine im Wesentlichen kreissektorförmige Kontur auf, welche zumindest einen Quadranten des kreisscheibenförmigen Förderelementes 14 abdeckt, um zu verhindern, dass auf dem Förderelement 14 aufliegendes Erntegut mit diesem vollständig umlaufen kann. Die Abdeckung 15 erstreckt sich ausgehend von ihrer dem Förderband 7 zugewandten Kante in Richtung der Drehachse 16 sowie ausgehend von der Drehachse 16 in Richtung der Einzugswalze 10. Die Oberfläche der Abdeckung 15 ist so beschaffen, dass sie eine geringe Oberflächenrauheit aufweist, so dass das Erntegut von dieser herabgleiten kann. Die Anordnung der Fördermittel 13 ist derart gewählt, dass sie sich in den am weitesten von der Einzugsvorrichtung 8 gelegenen Eckbereichen der Bodenplatte 9 befinden. Die Eckbereiche der Bodenplatte 9 werden quer zur Bewegungsrichtung des Schneidwerkes 1 durch den Messerbalken 6 und senkrecht hierzu durch das jeweilige Förderband 7 begrenzt. In diesen Eckbereichen ist die Wahrscheinlichkeit einer Ablagerung von Erntegut, welches von der Einzugsvorrichtung 8 nicht erfasst wird, am größten. Das von den jeweiligen Förderbändern 7 in diesen Eckbereichen abgegebene Erntegut gelangt auf die sich drehenden Förderelemente 14 und wird in Drehrichtung DR mitgeführt und beschleunigt.

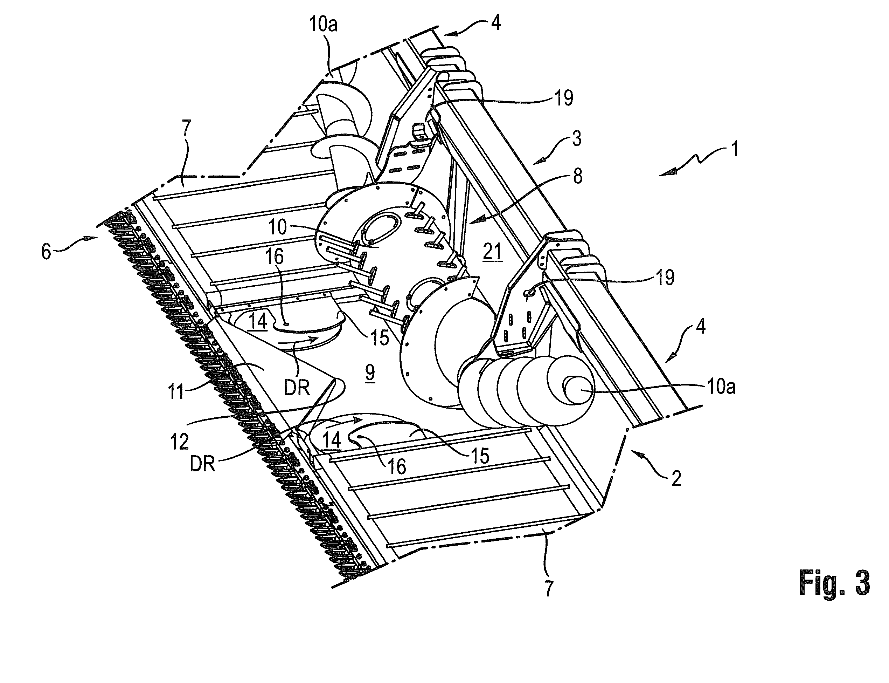

Die Darstellung in Fig. 3 zeigt eine Detailansicht des Mittenbereiches 3 des Schneidwerkes 1 in einer Ansicht von schräg oben. Wie hieraus ersichtlich ist, ist der Vorsprung 11 ausgehend von dem Messerbalken 6 in Richtung der Einzugswalze 10 geneigt ausgeführt, damit von dem Messerbalken 6 abgeschnittenes Erntegut auf die Bodenplatte 9 rutschen kann und somit in den Einzugsbereich der Einzugswalze 10 gelangt. Das Förderelement 14 und dessen Abdeckung 15 liegen in einer Ebene unterhalb der das Erntegut fördernden Oberseite des jeweiligen Förderbandes 7, so dass das Erntegut auf diese gelangt, wenn das Förderband 7 um eine Umlenkrolle umgelenkt wird.

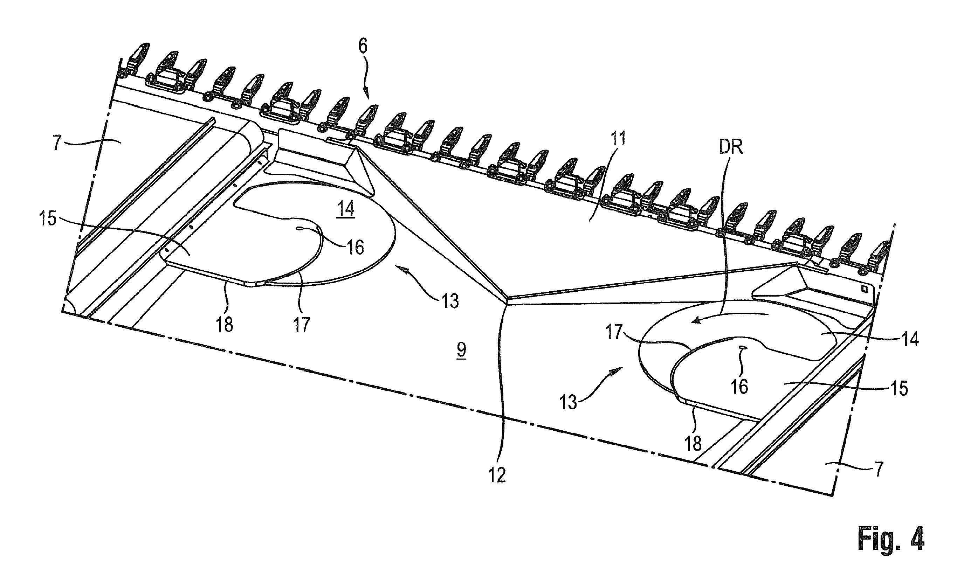

In Fig. 4 ist eine Detailansicht des Schneidwerkes 1 gemäß Fig. 1 von schräg hinten dargestellt. Aus dieser Perspektive ist die Kontur des Vorsprungs 11 mit seiner Spitze 12 gut erkennbar. Weiterhin ist in dieser Ansicht der rückwärtige Bereich der jeweiligen Abdeckung 15 dargestellt, welcher das Förderelement 14 überlappt. In dem rückwärtigen Bereich der jeweiligen Abdeckung 15 ist ein Abstreifer 18 angeordnet, der sich abschnittsweise parallel zu der Außenkante des Förderelementes 14 in Richtung der Bodenplatte 9 erstreckt. Die Stirnseite des Abschnittes der Abdeckung 15, der das Förderelement 14 überlappt, weist eine Wulst 17 mit kreisförmigem Querschnitt auf. Die Wulst 17 verhindert einerseits das Eindringen oder Einziehen von Erntegut in den Spalt zwischen dem Förderelement 14 und der Abdeckung 15 sowie andererseits auf Grund der abgerundeten Form das Schneiden von Erntegut.

Das Erntegut, welches von dem jeweiligen Förderband 7 an den Mittenabschnitt 3 abgegeben wird, gelangt in den dem Messerbalken 6 zugewandten Bereich des Förderelementes 14 und wird von diesem in Drehrichtung DR transportiert, bis es an die Wulst 17 der Abdeckung 15 stößt, von welcher das Erntegut in Richtung der Einzugsvorrichtung 8 abgestriffen wird. Etwas beabstandet zum Messerbalken 6 an den Mittenabschnitt 3 abgegebenes Erntegut gelangt auf die Abdeckung 15 und gleitet von dieser auf Grund der geringen Oberflächenrauheit herunter. Erntegutansammlungen in den Eckbereichen werden somit vermieden, wodurch auch verhindert wird, dass Erntegut von dem jeweiligen Förderband 7 bei dessen Umlenkung von Leisten auf der Oberseite des Förderbandes 7 zwischen diesem und der Bodenplatte 9 eingeklemmt und mitgenommen, wodurch es unterhalb des Förderbandes 7 gelangen kann. Die aktive Förderung des Erntegutes durch die Förderelemente 14 führt auch dazu, dass sich kein Erntegut auf dem Vorsprung 11 hinter dem Messerbalken 6 ansammeln kann, da dieses durch das auf den Förderelementen 14 befindliche Erntegutstrom mitgenommen wird.

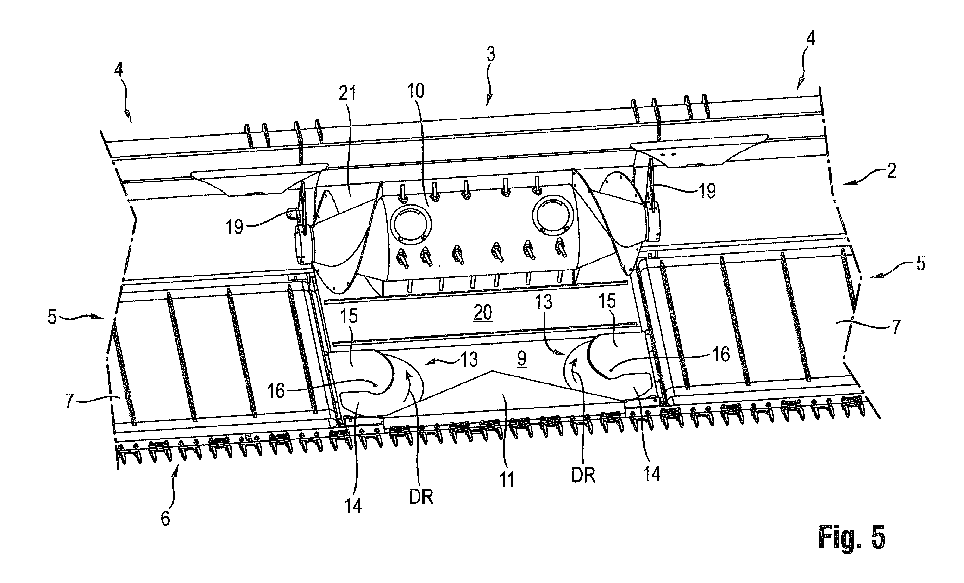

Die Darstellung in Fig. 5 zeigt eine Detailansicht des Mittenbereiches 3 einer zweiten Ausführungsform des Schneidwerkes 1. Das Schneidwerk 1 unterscheidet sich dadurch, dass im Mittenbereich 3 ein aktiv angetriebenes, endlos umlaufendes Band 20 angeordnet ist und dass die Einzugswalze 10 in Richtung der Öffnung 21 im Grundrahmen 2 des Schneidwerkes 1 zurückversetzt angeordnet ist. Das Band 20 fördert das von den Förderbändern 7 des jeweiligen Seitenabschnittes 4 an den Mittenabschnitt 3 abgegebene Erntegut quer zu der Förderrichtung der Förderbänder 7 in Richtung der Einzugsvorrichtung 8. In Förderrichtung des Bandes 20 gesehen schließt sich die Bodenplatte 9 mit ihrem Vorsprung 11 und den Fördermitteln 13 in den Eckbereichen an, wie sie weiter oben beschrieben worden sind.

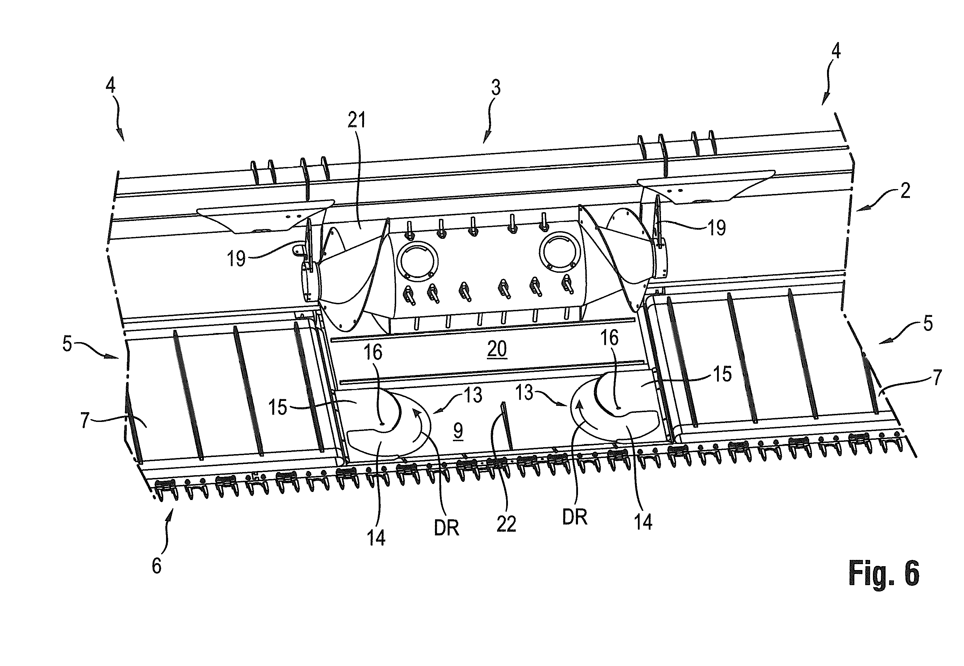

Eine weitere Ausführungsform ist in Fig. 6 dargestellt. Fig. 6 zeigt eine Detailansicht des Mittenabschnittes 3 gemäß Fig. 5 in einer dritten Ausführungsform. Im Unterschied zu der Ausführungsform gemäß Fig. 5 wird in diesem Ausführungsbeispiel auf den keilförmigen Vorsprung 11 verzichtet. Stattdessen ist die Bodenplatte 9 durch ein sich senkrecht zu der Bodenplatte 9 nach oben erstreckendes Begrenzungselement 22 in zwei Abschnitte unterteilt, welches sich ausgehend von dem Messerbalken 6 zumindest abschnittsweise in Richtung des Grundrahmens 2 erstreckten.

**Bezugszeichenliste**

| | | | |
|---|---|---|---|
| **1** | Schneidwerk | **DR** | Drehrichtung |
| **2** | Grundrahmen | | |
| **3** | Mittenabschnitt | | |
| **4** | Seitenabschnitt | | |
| **5** | Fördervorrichtung | | |
| **6** | Messerbalken | | |
| **7** | Förderband | | |
| **8** | Einzugsvorrichtung | | |
| **9** | Bodenplatte | | |
| **10** | Einzugswalze | | |
| **10a** | Einzugsschnecken | | |
| **11** | Vorsprung | | |
| **12** | Spitze | | |
| **13** | Fördermittel | | |
| **14** | Förderelement | | |
| **15** | Abdeckung | | |
| **16** | Drehachse | | |
| **17** | Wulst | | |
| **18** | Abstreifer | | |
| **19** | Rahmenelement | | |
| **20** | Band | | |
| **21** | Öffnung | | |
| **22** | Begrenzungselement | | |

## Patentansprüche

1. Schneidwerk (1), umfassend einen an einem Grundrahmen (2) angeordneten Mittenabschnitt (3) und mindestens zwei benachbart zu dem Mittenabschnitt (3) an dem Grundrahmen (2) angeordnete Seitenabschnitte (4), einen sich über die Breite des Schneidwerkes (1) erstreckenden Messerbalken (6) sowie zumindest eine hinter dem Messerbalken (6) angeordnete Fördervorrichtung (5), die auf den jeweiligen Seitenabschnitten (4) als mindestens ein endloses Förderband (7) ausgeführt ist, welche benachbart zu dem Mittenabschnitt (3) angeordnet sind, um von dem Messerbalken (6) abgeschnittenes Erntegut seitwärts in Richtung des Mittenabschnittes (3) zu transportieren, **dadurch gekennzeichnet, dass** auf dem Mittenabschnitt (3) antreibbare Förderelemente (14) benachbart zu dem Messerbalken (6) und dem jeweiligen Seitenabschnitt (4) angeordnet sind, welche von den jeweiligen Förderbändern (7) der Seitenabschnitten (4) an den Mittenabschnitt (3) abgegebenes Erntegut annehmen und umlenken.

2. Schneidwerk (1) nach Anspruch 1, **dadurch gekennzeichnet, dass** das jeweilige Förderelement (14) kreisscheibenförmig ausgebildet ist.

3. Schneidwerk (1) nach einem der Ansprüche 1 oder 2, **dadurch gekennzeichnet, dass** das jeweilige Förderelement (14) auf einer auf dem Mittenabschnitt (3) angeordneten vertikalen Drehachse (16) gelagert ist.

4. Schneidwerk (1) nach einem der Ansprüche 1 bis 3, **dadurch gekennzeichnet, dass** das jeweilige Förderelement (14) eine Abdeckung (15) aufweist, welche das Förderelemente (14) teileweise abdeckt.

5. Schneidwerk (1) nach Anspruch 4, **dadurch gekennzeichnet, dass** die Abdeckung (15) eine im Wesentlichen kreissektorförmige Kontur aufweist.

6. Schneidwerk (1) nach einem der Ansprüche 4 oder 5, **dadurch gekennzeichnet, dass** sich die Abdeckung (15) von der Drehachse (16) ausgehend in einer von dem Messerbalken im Wesentlichen abgewandten Richtung über das Förderelement (14) erstreckt.

7. Schneidwerk (1) nach einem der Ansprüche 4 bis 6, **dadurch gekennzeichnet, dass** die Abdeckung (15) eine Oberfläche mit geringer Oberflächenrauheit aufweist.

8. Schneidwerk (1) nach einem der Ansprüche 4 bis 7, **dadurch gekennzeichnet, dass** die Abdeckung (15) auf ihrer dem Förderband (7) abgewandten Seite eine konvexe Kontur aufweist.

9. Schneidwerk (1) nach Anspruch 8, **dadurch gekennzeichnet, dass** die konvex konturierte Seite der Abdeckung (15) einen Wulst (17) mit im Wesentlichen kreisförmigen Querschnitt aufweist.

10. Schneidwerk (1) nach einem der Ansprüche 1 bis 9, **dadurch gekennzeichnet, dass** der Mittenabschnitt (3) ein Band (20) aufweist, welches sich quer zu den Förderbändern (7) der Seitenabschnitte (4) erstreckt.

11. Schneidwerk (1) nach einem der Ansprüche 1 bis 10, **dadurch gekennzeichnet, dass** der Mittenabschnitt (3) eine starre, auf ihrer Oberseite konturierte Bodenplatte (9) aufweist, die das von den Seitenabschnitten (4) kommende Erntegut umlenkt.

12. Schneidwerk (1) nach einem der Ansprüche 1 bis 11, **dadurch gekennzeichnet, dass** der Mittenabschnitt (3) ein Leit- und/oder Begrenzungselement (11, 22) aufweist, welches zwischen den Förderelementen (14) angeordnet ist.

13. Schneidwerk (1) nach Anspruch 12, **dadurch gekennzeichnet, dass** das Leitelement als ein keilförmiger Vorsprung (11) ausgeführt ist.

14. Schneidwerk (1) nach Anspruch 12, **dadurch gekennzeichnet, dass** das Begrenzungselement (22) als ein im Wesentlichen senkrecht auf dem Mittenabschnitt (3) stehend angeordnetes Blech ausgeführt ist, welches sich ausgehend von dem Messerbalken (6) zumindest abschnittsweise in Richtung des Grundrahmens (2) erstreckt.

15. Schneidwerk (1) nach einem der Ansprüche 1 bis 15, **dadurch gekennzeichnet, dass** das jeweilige Förderelement (14) einzelmotorisch antreibbar ist.
